# EUROPEAN PATENT SPECIFICATION

(11) **EP 2 905 982 B1**
(45) Date of publication and mention of the grant of the patent: **24.07.2019**
(21) Application number: 12887719.8
(22) Date of filing: 31.10.2012
(51) Int. Cl.: H04W 8/30, H04L 12/24, G06F 11/14

(54) **NETWORK DATA ROLLBACK METHOD AND DEVICE**
VERFAHREN UND VORRICHTUNG FÜR NETZWERKDATEN-ROLLBACK
PROCÉDÉ ET DISPOSITIF POUR UN RETOUR EN ARRIÈRE SUR L'ÉTAT DE DONNÉES RÉSEAU

(43) Date of publication of application: 12.08.2015
(73) Proprietor: Huawei Technologies Co., Ltd., Longgang District Shenzhen, Guangdong 518129 (CN)
(72) Inventor: FANG, Xianggan, Shenzhen Guangdong 518129 (CN)
(74) Representative: Pfenning, Meinig & Partner mbB
(86) International application number: PCT/CN2012/083862
(87) International publication number: WO 2014/067105

(56) References cited:
- CN-A- 1 996 875
- CN-A- 102 694 686
- CN-A- 102 726 002
- US-A1- 2003 051 049
- US-A1- 2008 288 630
- US-A1- 2011 231 532
- US-B1- 6 704 752
- "Information technology - Open Systems Interconnection - Service definition for the Commitment, Concurrency and Recovery service element; X.851 (11/93)", ITU-T STANDARD, INTERNATIONAL TELECOMMUNICATION UNION, GENEVA ; CH, no. X.851 (11/93), 16 November 1993 (1993-11-16), pages 1-56, XP017462887, [retrieved on 2001-08-15]
- "Method and System for Rolling Back One or More Service Orders in Telecom Industry in an Optimal Manner", IP.COM JOURNAL, IP.COM INC., WEST HENRIETTA, NY, US, 15 February 2010 (2010-02-15), XP013136990, ISSN: 1533-0001

## Description

### TECHNICAL FIELD

The present invention relates to the field of communications, and in particular, to a network data rollback method and a rollback device.

### BACKGROUND

In wireless network operation, a situation where a wireless network index decreases after wireless network data is adjusted often occurs. In order to rapidly recover the wireless network index, an operation of restoring adjusted data to data before adjustment is generally used. In complex wireless network operation, an important method for performing a data restoration operation is: tagging a time stamp to wireless network data before the data is adjusted, and storing a data snapshot at the time point, and tagging a time stamp again after a wireless network is adjusted and storing a data snapshot at a new time; in this way, the data restoration operation (generally called data rollback) may be performed by using difference comparison between the data snapshots at the two time stamps.

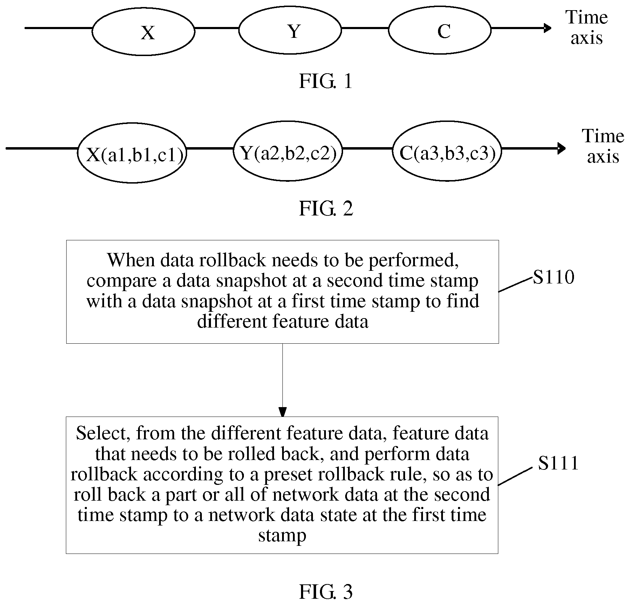

As shown in FIG. 1, a time stamp X is tagged to a time point X, and a data snapshot at the stamp X is stored. Configuration adjustment is performed on a wireless network, and a base station is added. A time stamp Y is tagged at a time point Y to adjusted network configuration data, and a data snapshot at the stamp Y is stored. A stamp Z and a data snapshot at the stamp Z can be obtained by analogy. In FIG. 1, latest configuration data is Z, and oldest configuration data is X. The following rollback paths of the configuration data exist: Z->Y, Z->X, and Z->Y->X (configuration rollback needs to be performed twice).

Currently, when configuration data rollback is performed, data comparison is performed on a source configuration data snapshot point and a target configuration data snapshot point to obtain different configuration data through comparison, and a related data configuration command is generated according to the different configuration data, and an objective of configuration rollback can be achieved by performing the related data configuration command. Taking the rollback path Z->Y as an example, it can be known by comparing a difference between data at Z and Y that, Z has configuration data of one cell more than Y, and a system will execute a command of deleting related
configuration data of a current network may be rolled back to that at Y. However, in the prior art at present, when a difference between data at two stamps is obtained through comparison, all different data is rolled back in a unit of entire different data.

US 2011/0231532 A1 discloses a network management apparatus, a network management method and a network management program. The network management apparatus includes a processor, and a storage. The storage that stores an operation type indicating a rollback operation method by associating with attributes held by a command defining network settings. The processor executes extracting a difference between a command forming current setting information and a command forming previous setting information when the setting information set by the command is brought back to the previous setting information and acquiring the operation type corresponding to extracted command attributes from the storage unit, to generate a rollback command defining the rollback operation in accordance with the acquired operation type.

US 2008/0288630 A1 relates to a device management. A device, such as a mobile phone, comprises a management tree store which stores an Open Mobile Alliance Device Management (OMA DM) management tree. A tree processor is arranged to detect a change associated with at least a first node of the management tree. A backup node processor adds a first backup node as a child node of the first node in response to the detection of the change. The backup node comprises backup data representing a setting for the first node prior to the change. A restore processor is arranged to restore at least part of the management tree to a setting prior to the change in response to a retrieval of the backup data from the first backup node. The invention may facilitate/improve backup and restore operations for OMA DM devices.

### SUMMARY

In view of this, the present invention provides a network data rollback method and device, which may roll back a part or all of different data of data snapshots at two time stamps in a unit of feature data.

The object of the present invention is solved by the independent claims. Advantageous embodiments are described by the dependent claims.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to embodiments of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

### BRIEF DESCRIPTION OF DRAWINGS

FIG. 1 is a schematic principle diagram of data rollback in the prior art;
FIG. 2 is a schematic principle diagram of network data rollback according to the present invention;
FIG. 3 is a schematic flowchart of a first embodiment of a network data rollback method according to the present invention;
FIG. 4 is a schematic flowchart of a second embodiment of a network data rollback method according to the present invention;
FIG. 5 is a schematic flowchart of a third embodiment of a network data rollback method according to the present invention;
FIG. 6 is a schematic diagram of an embodiment of dividing network data according to the present invention;
FIG. 7 is a schematic structural composition diagram of a first embodiment of a network data rollback device according to the present invention;
FIG. 8 is a schematic structural composition diagram of a second embodiment of a network data rollback device according to the present invention;
FIG. 9 is a schematic structural composition diagram of an embodiment of a data rollback unit in FIG. 8;
FIG. 10 is a schematic structural composition diagram of a third embodiment of a network data rollback device according to the present invention;
FIG. 11 is a schematic structural composition diagram of an embodiment of a data rollback unit in FIG. 10; and
FIG. 12 is a schematic structural composition diagram of a fourth embodiment of a network data rollback device according to the present invention.

### DESCRIPTION OF EMBODIMENTS

FIG. 3 is a schematic flowchart of a first embodiment of a network data rollback method according to the present invention. As shown in FIG. 3, the method may include the following steps:
Step S110: When data rollback needs to be performed, compare a data snapshot at a second time stamp with a data snapshot at a first time stamp to find different feature data.

In specific implementation, network data in the present invention is formed by multiple kinds of feature data. Alternatively, network data in the present invention includes multiple layers, and at least one kind of feature data is included at each layer. That network data in the present invention includes feature data refers to that the network data in the present invention is formed by small data blocks, where each kind of feature data and/ each layer represents a small data block of the network data.

Step Sill: Select, from the different feature data, feature data that needs to be rolled back, and perform data rollback according to a preset rollback rule, so as to roll back a part or all of network data at the second time stamp to a network data state at the first time stamp.

In specific implementation, a set rollback rule varies with a manner of dividing the feature data of the network data. For example, when the feature data included in the network data is not associated with each other, the rollback rule may be set as that data rollback may be separately performed on each selected piece of feature data. When a dependency relationship exists between the feature data included in the network data, the rollback rule must also be set as rolling back the feature data in the dependency relationship together; in this way, normal running of a network can be ensured after the data rollback.

Further referring to FIG. 2, in the present invention, a time stamp X is tagged to a time point X and a data snapshot at the stamp X is stored (network data at the stamp X includes feature data a (a state is a1), feature data b (a state is b1), and feature data c (a state is c1)); configuration adjustment is performed on a wireless network, and for adjusted network configuration data, a time stamp Y is tagged to a time point Y, and a data snapshot at the stamp Y is stored (network data at the stamp Y includes feature data a (a state is a2), feature data b (a state is b2), and feature data c (a state is c2)); and a stamp Z and a data snapshot at the stamp Z can be obtained by analogy (network data at the stamp Z includes feature data a (a state is a3), feature data b (a state is b3), and feature data c (a state is c3)). In FIG. 2, latest network data is Z, and oldest network data is X. The following rollback paths of the network data exist: Z->Y, Z->X, and Z->Y->X (configuration rollback needs to be performed twice). Taking the rollback path Z->Y as an example, it can be known by comparing a difference between data at Z and Y that, the data at Z is completely different from the data at Y; at this time, when the method in the present invention is used, one or more pieces of the feature data a, the feature data b, and the feature data c may be selected to be rolled back. For example, the feature data c at Z may be selected to be kept in the state c3, while the feature data a and the feature data b are rolled back to the states a2 and b2. It can be known from the foregoing that, in the present invention, feature data may be used as a unit for rollback, and data rollback is selectively performed without rolling back all different data obtained through comparison.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to embodiments of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

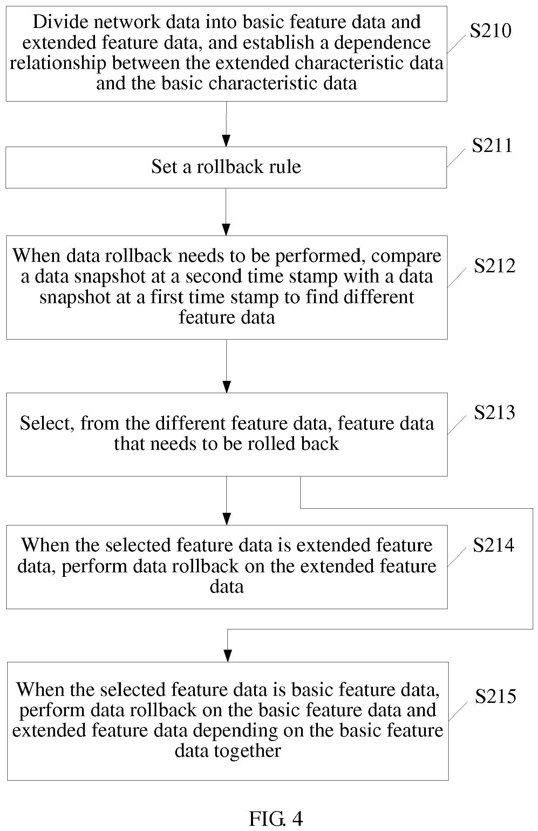

FIG. 4 is a schematic flowchart of a second embodiment of a network data rollback method according to the present invention. As shown in FIG. 4, the method may include the following steps:
Step S210: Divide network data into basic feature data and extended feature data, and establish a dependency relationship between the extended feature data and the basic feature data.

In some feasible implementation manners, the network data may be divided into different types of basic feature data according to different usages of the network data, for example, hardware device configuration in a network layout is classified into basic feature data A, network optimization data of a network is classified into basic feature data B, and a link connection in the network layout is classified into extended feature data Q, and a dependency relationship between the extended feature data Q and the basic feature data A is established because a link of the network needs to depend on the hardware device configuration of the network. Therefore, a feature data distribution table shown by Table 1 may be formed.

**Table 1**

| Basic feature data | Extented feature depending on the basic feature |
|---|---|
| Basic feature data A | Extended feature data Q |
| Basic feature data B | |

Step S211: Set a rollback rule, where the rollback rule includes: performing data rollback only on extended feature data when the extended feature data is rolled back, and performing data rollback on basic feature data and extended feature data depending on the basic feature data together when the basic feature data is rolled back. With reference to Table 1, it is assumed that a state of the basic feature data A at a first time stamp is A1, and the state of the basic feature data A at a second time stamp is A2; and a state of the extended feature data Q at the first time stamp is marked as Q1, and the state of the extended feature data Q at the second time stamp is Q2. When the basic feature data A needs to be rolled back to the state A1 at the first time stamp from the state A2 at the second time stamp, the extended feature data Q depending on the basic feature data A needs to be rolled back to the state Q1 at the first time stamp from the state Q2 at the second time stamp at the same time when the A2 is rolled back to the A1. When the extended feature data Q needs to be rolled back to the state Q1 at the first time stamp from the state Q2 at the second time stamp, the Q2 is directly rolled back to the Q1.

Step S212: When data rollback needs to be performed, compare a data snapshot at a second time stamp with a data snapshot at a first time stamp to find different feature data. Still with reference to Table 1, it is assumed that a state of the basic feature data B at the first time stamp is B1, and the state of the basic feature data B at the second time stamp is B2. Therefore, a data snapshot of the network data in Table 1 at the first time stamp is that, the basic feature data A is in the state A1, the extended feature data Q is in the state Q1, and the basic feature data B is in the state B1; and a data snapshot at the second time stamp is that, the basic feature data A is in the state A2, the extended feature data Q is in the state Q2, and the basic feature data B is in the state B2. Therefore, when the data rollback needs to be performed in step S212, it can be found by comparing the data snapshot at the second time stamp with the data snapshot at the first time stamp that, the states of the basic feature data A, the basic feature data B, and the extended data Q are all changed, that is, the three are all different feature data.

Step S213: Select, from the different feature data, feature data that needs to be rolled back. Still with reference to Table 1, in step S213, the basic feature data A may be selected to be rolled back, the basic feature B may be selected to be rolled back, or the extended feature Q may be selected to be rolled back.

Step S214: When the selected feature data is extended feature data, perform data rollback on the extended feature data, so as to roll back a part or all of network data at the second time stamp to a network data state at the first time stamp, and then end the process.

Step S215: When the selected feature data is basic feature data, perform data rollback on the basic feature data and extended feature data depending on the basic feature data together, so as to roll back a part or all of network data at the second time stamp to a network data state at the first time stamp. Still with reference to Table 1, when it is selected that the basic feature data A needs to be rolled back to the state A1 at the first time stamp from the state A2 at the second time stamp in step S213, the extended feature data Q depending on the basic feature data A needs to be rolled back to the state Q1 at the first time stamp from the state Q2 at the second time stamp at the same time when the A2 is rolled back to the A1. When the extended feature data Q needs to be rolled back to the state Q1 at the first time stamp from the state Q2 at the second time stamp, the Q2 is directly rolled back to the Q1.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to the embodiment of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

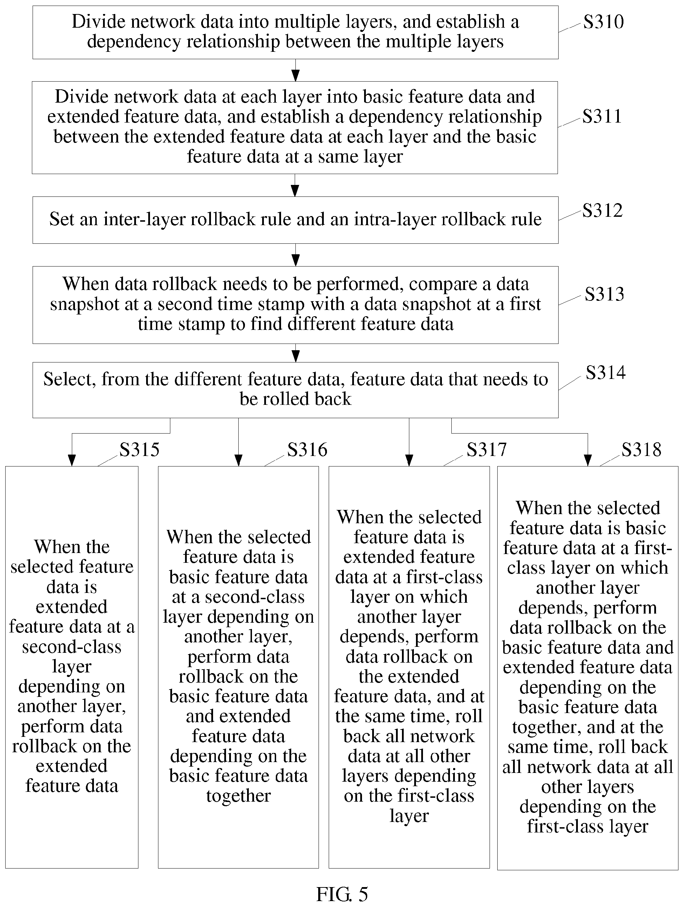

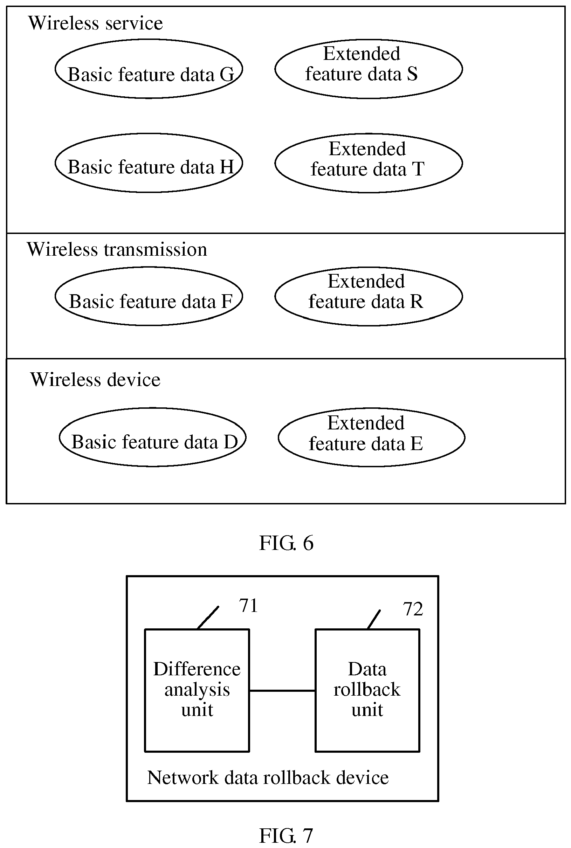

FIG. 5 is a schematic flowchart of a third embodiment of a network data rollback method according to the present invention. As shown in FIG. 5, the method may include the following steps:
Step S310: Divide network data into multiple layers, and establish a dependency relationship between the multiple layers, where the multiple layers at least include a second-class layer depending on another layer and a first-class layer on which another layer depends. For example, as shown in FIG. 6, the network data may be divided into a wireless device layer, a wireless transmission layer, and a wireless service layer according to different functions of the network data. The wireless device layer is a first-class layer; the wireless transmission layer is a first-class layer and also is a second-class layer, and depends on the wireless device layer when acting as a second-class layer, and the wireless service layer depends on the wireless transmission layer when the wireless transmission layer acts as a first-class layer; and the wireless service layer is a second-class layer, and depends on the wireless transmission layer.
Step S311: Divide network data at each layer into basic feature data and extended feature data, and establish a dependency relationship between the extended feature data at each layer and the basic feature data at a same layer. For example, as shown in FIG. 6, network data at the wireless device layer, the wireless transmission layer, and the wireless service layer may be further divided into different basic feature data and extended feature data, for example, the network data at the wireless device layer may be further divided into basic feature data D and extended feature data E, the network data at the wireless transmission layer may be further divided into basic feature data F and extended feature data R, and the network data at the wireless service layer may be further divided into basic feature data G, basic feature data H, extended feature data S, and extended feature data T, where the extended feature data S depends on the basic feature data G, and the extended feature data T depends on the basic feature data H.
Step S312: Set an inter-layer rollback rule and an intra-layer rollback rule. Specifically, the inter-layer rollback rule includes: for a second-class layer depending on another layer, performing rollback by using the intra-layer rollback rule, and for a first-class layer on which another layer depends, rolling back network data of all other layers depending on the first-class layer at the same time when feature data at the first-class layer is rolled back by using the intra-layer rollback rule; and the intra-layer rollback rule includes: performing data rollback on intra-layer extended feature data when the intra-layer extended feature data is rolled back, and performing data rollback on intra-layer basic feature data and extended feature data depending on the basic feature data together when the intra-layer basic feature data is rolled back. With reference to FIG. 6, it can be known that, when data at the wireless service layer needs to be rolled back, the basic feature and the extended feature data at the wireless service layer are rolled back by using the intra-layer rollback rule. For example, when the basic feature data G at the wireless service layer needs to be rolled back, the basic feature data G is directly rolled back. When the extended feature data S at the wireless service layer needs to be rolled back, the extended feature data S and the basic feature data G need to be rolled back at the same time. When the basic feature F at the wireless transmission layer needs to be rolled back, the basic feature F and all feature data (the basic feature data G, the basic feature data H, the extended feature data S, and the extended feature data T) at the wireless service layer need to be rolled back at the same time.
Step S313: When data rollback needs to be performed, compare a data snapshot at a second time stamp with a data snapshot at a first time stamp to find different feature data. With reference to FIG. 6, it is assumed that, at the first time stamp, at the wireless device layer, a state of the basic feature data D is D1 and a state of the extended feature E is E1; at the wireless transmission layer, a state of the basic feature data F is F1 and a state of the extended feature data R is R1; and at the wireless service layer, a state of the basic feature data G is G1, a state of the basic feature data H is H1, a state of the extended feature data S is S1, and a state of the extended feature data T is T1; and at the second time stamp, at the wireless device layer, the state of the basic feature data D is D2, and the state of the extended feature data E is E2; at the wireless transmission layer, the state of the basic feature data F is F1 and the state of the extended feature data R is R1; and at the wireless service layer, the state of the basic feature data G is G2, the state of the basic feature data H is HI, the state of the extended feature data S is S2, and the state of the extended feature data T is T2. Therefore, after the comparison in step S313, the different feature data is the basic feature D at the wireless device layer, the basic feature data E at the wireless device layer, and the basic feature data G, the feature data S, and the extended feature data T at the wireless service layer.
Step S314: Select, from the different feature data, feature data that needs to be rolled back. In specific implementation, one or more pieces of the different feature data may be selected from the different feature data as the feature data that needs to be rolled back. With reference to FIG. 6, one or more pieces of the basic feature D at the wireless device layer, the basic feature data E at the wireless device layer, the basic feature data G, the feature data S, and the extended feature data T at the wireless service layer may be selected as the different feature data.
Step S315: When the selected feature data is extended feature data at a second-class layer depending on another layer, perform data rollback on the extended feature data, so as to roll back a part or all of network data at the second time stamp to a network data state at the first time stamp. With reference to FIG. 6, when the selected feature data is the extended feature data T at the wireless service layer, the extended feature data T may be directly rolled back to the state T1 at the first time stamp from the state T2 at the second time stamp.
Step S316: When the selected feature data is basic feature data at a second-class layer depending on another layer, perform data rollback on the basic feature data and extended feature data depending on the basic feature data together, so as to roll back a part or all of network data at the second time stamp to a network data state at the first time stamp. With reference to FIG. 6, when the selected feature data is the basic feature data G at the wireless service layer, the extended feature data S depending on the basic feature data G needs to be rolled back to the state S1 at the first time stamp from the S2 at the second time stamp at the same time when the basic feature data G is rolled back to the state G1 at the first time stamp from the G2 at the second time stamp.
Step S317: When the selected feature data is extended feature data at a first-class layer on which another layer depends, perform data rollback on the extended feature data, and at the same time, roll back all network data at all other layers depending on the first-class layer, so as to roll back a part or all of network data at the second time stamp to a network data state at the first time stamp. With reference to FIG. 6, when the selected feature data is the extended feature data E at the wireless device layer, the extended feature data E is rolled back to the state E1 at the first time stamp from the E2 at the second time stamp.
Step S318: When the selected feature data is basic feature data at a first-class layer on which another layer depends, perform data rollback on the basic feature data and extended feature data depending on the basic feature data together, and at the same time, roll back all network data at all other layers depending on the first-class layer, so as to roll back a part or all of network data at the second time stamp to a network data state at the first time stamp. With reference to FIG. 6, when the selected feature data is the basic feature data D at the wireless device layer, the extended feature data E depending on the basic feature data D needs to be rolled back to the state E1 at the first time stamp from the E2 at the second time stamp at the same time when the basic feature data D is rolled back to the state D1 at the first time stamp from the D2 at the second time stamp.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to the embodiment of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

Correspondingly, the embodiments of the present invention further provide a device embodiment for implementing the method embodiment of the present invention, and the device embodiment of the present invention is described in detail in the following with reference to the accompanying drawings.

FIG. 7 is a schematic structural composition diagram of a first embodiment of a network data rollback device according to the present invention. As shown in FIG. 7, the device may include the following units:
A difference analysis unit 71 is configured to: when data rollback needs to be performed, compare a data snapshot at a second time stamp with a data snapshot at a first time stamp to find different feature data.

In specific implementation, network data in the present invention is formed by multiple kinds of feature data. Alternatively, network data in the present invention includes multiple layers, and at least one kind of feature data is included at each layer. That network data in the present invention includes feature data refers to that the network data in the present invention is formed by small data blocks, where each kind of feature data and/ each layer represents a small data block of the network data.

A data rollback unit 72 is configured to select, from the different feature data found by the difference analysis unit 71, feature data that needs to be rolled back, and perform data rollback according to a preset rollback rule, so as to roll back a part or all of network data at the second time stamp to a network data state at the first time stamp.

In specific implementation, a set rollback rule varies with a manner of dividing the feature data of the network data. For example, when the feature data included in the network data is not associated with each other, the rollback rule may be set as that data rollback may be separately performed on each selected piece of feature data. When a dependency relationship exists between the feature data included in the network data, the rollback rule must also be set as rolling back the feature data in the dependency relationship together; in this way, normal running of a network can be ensured after the data rollback.

Further referring to FIG. 2, in the present invention, a time stamp X is tagged to a time point X and a data snapshot at the stamp X is stored (network data at the stamp X includes feature data a (a state is a1), feature data b (a state is b1), and feature data c (a state is c1)); configuration adjustment is performed on a wireless network, and for adjusted network configuration data, a time stamp Y is tagged to a time point Y, and a data snapshot at the stamp Y is stored (network data at the stamp Y includes feature data a (a state is a2), feature data b (a state is b2), and feature data c (a state is c2)); and a stamp Z and a data snapshot at the stamp Z can be obtained by analogy (network data at the stamp Z includes feature data a (a state is a3), feature data b (a state is b3), and feature data c (a state is c3)). In FIG. 2, latest network data is Z, and oldest network data is X. The following rollback paths of the network data exist: Z->Y, Z->X, and Z->Y->X (configuration rollback needs to be performed twice). Taking the rollback path Z->Y as an example, it can be known by comparing a difference between data at Z and Y that, the data at Z is completely different from the data at Y; at this time, when the method in the present invention is used, one or more pieces of the feature data a, the feature data b, and the feature data c may be selected to be rolled back. For example, the feature data c at Z may be selected to be kept in the state c3, while the feature data a and the feature data b are rolled back to the states a2 and b2. It can be known from the foregoing that, in the present invention, feature data may be used as a unit for rollback, and data rollback is selectively performed without rolling back all different data obtained through comparison.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to the embodiment of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

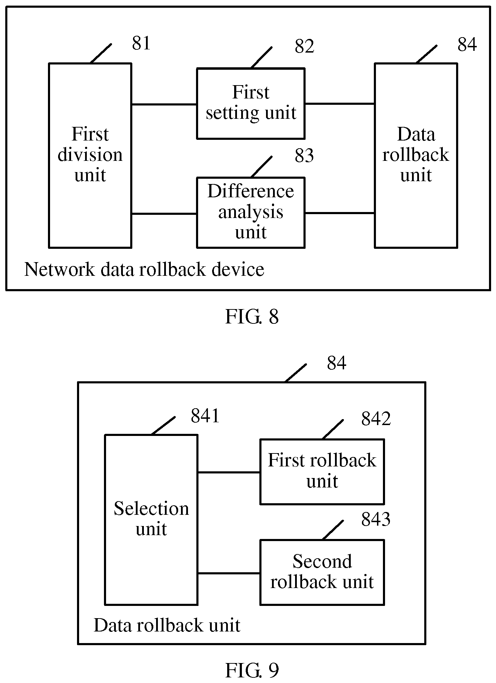

FIG. 8 is a schematic structural composition diagram of a second embodiment of a network data rollback device according to the present invention. As shown in FIG. 8, the device may include: a first division unit 81, a first setting unit 82, a difference analysis unit 83, and a data rollback unit 84.

The first division unit 81 is configured to divide network data into basic feature data and extended feature data, and establish a dependency relationship between the extended feature data and the basic feature data.

In some feasible implementation manners, the first division unit 81 may divide the network data into different types of basic feature data according to different usages of the network data, for example, classify hardware device configuration in a network layout into basic feature data A, classify network optimization data of a network into basic feature data B, and classify a link connection in the network layout into extended feature data Q, and establish a dependency relationship between the extended feature data Q and the basic feature data A because a link of the network needs to depend on the hardware device configuration of the network. Therefore, a feature data distribution table shown by Table 1 may be formed.

**Table 1**

| Basic feature data | Extended feature depending on the basic feature |
|---|---|
| Basic feature data A | Extended feature data Q |
| Basic feature data B | |

The first setting unit 82 is configured to set a rollback rule, where the rollback rule includes: performing data rollback only on extended feature data when the extended feature data is rolled back, and performing data rollback on basic feature data and extended feature data depending on the basic feature data together when the basic feature data is rolled back. With reference to Table 1, it is assumed that a state of the basic feature data A at a first time stamp is A1, and the state of the basic feature data A at a second time stamp is A2; and a state of the extended feature data Q at the first time stamp is marked as Q1, and the state of the extended feature data Q at the second time stamp is Q2. When the basic feature data A needs to be rolled back to the state A1 at the first time stamp from the state A2 at the second time stamp, a set rollback rule is that, the extended feature data Q depending on the basic feature data A needs to be rolled back to the state Q1 at the first time stamp from the state Q2 at the second time stamp at the same time when the A2 is rolled back to the A1. When the extended feature data Q needs to be rolled back to the state Q1 at the first time stamp from the state Q2 at the second time stamp, the Q2 is directly rolled back to the Q1.

The difference analysis unit 83 is configured to: when data rollback needs to be performed, compare a data snapshot at a second time stamp with a data snapshot at a first time stamp to find different feature data. Still with reference to Table 1, it is assumed that a state of the basic feature data B at the first time stamp is B1, and the state of the basic feature data B at the second time stamp is B2. Therefore, a data snapshot of the network data in Table 1 at the first time stamp is that, the basic feature data A is in the state A1, the extended feature data Q is in the state Q1, and the basic feature data B is in the state B1; and a data snapshot at the second time stamp is that, the basic feature data A is in the state A2, the extended feature data Q is in the state Q2, and the basic feature data B is in the state B2. Therefore, when the data rollback needs to be performed, it can be found by comparing the data snapshot at the second time stamp with the data snapshot at the first time stamp by the difference analysis unit 83 that, the states of the basic feature data A, the basic feature data B, and the extended data Q are all changed, that is, the three are all different feature data.

The data rollback unit 84 is configured to select, from the different feature data found by the difference analysis unit, feature data that needs to be rolled back, and perform data rollback according to a preset rollback rule, so as to roll back a part or all of network data at the second time stamp to a network data state at the first time stamp. Further, as shown in FIG. 9, the data rollback unit 84 in this embodiment may further include: a selection unit 841, a first rollback unit 842, and a second rollback unit 843 (in specific implementation, the data rollback unit 84 in this embodiment may also only include any one of the first rollback unit 842 and the second rollback unit 843).

The selection unit 841 is configured to select, from the different feature data found by the difference analysis unit, the feature data that needs to be rolled back. Still with reference to Table 1, the selection unit 841 may choose to roll back the basic feature data A, choose to roll back the basic feature B, or choose to roll back the extended feature Q.

The first rollback unit 842 is configured to: when the selected feature data is extended feature data, perform data rollback on the extended feature data, so as to roll back a part or all of the network data at the second time stamp to the network data state at the first time stamp. Still with reference to Table 1, when the selection unit 841 chooses the basic feature data A for rollback to the state A1 at the first time stamp from the state A2 at the second time stamp, the first rollback unit 842 directly rolls back the A2 to the A1.

The second rollback unit 843 is configured to: when the selected feature data is basic feature data, perform data rollback on the basic feature data and extended feature data depending on the basic feature data together, so as to roll back a part or all of the network data at the second time stamp to the network data state at the first time stamp. Still with reference to Table 1, when the selection unit 841 chooses the basic feature data A for rollback to the state A1 from the state A2, the second rollback unit 843 needs to roll back the extended feature data Q depending on the basic feature data A to the state Q1 at the first time stamp from the state Q2 at the second time stamp at the same time.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to the embodiment of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

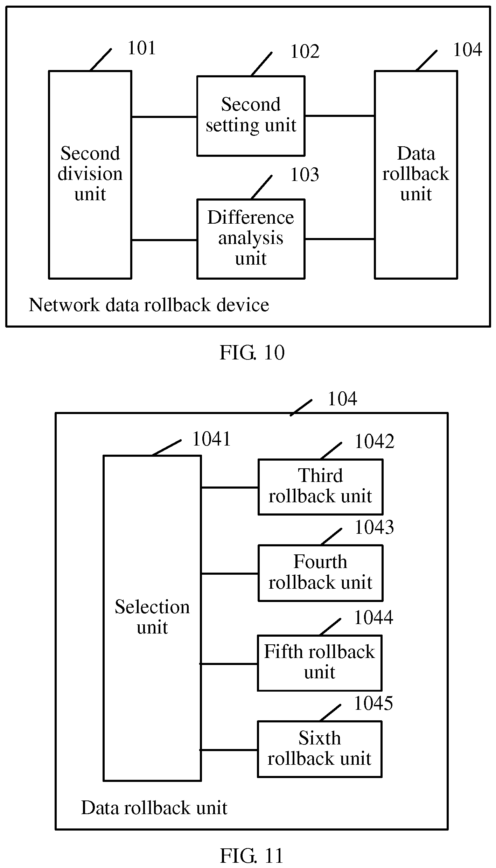

FIG. 10 is a schematic structural composition diagram of a third embodiment of a network data rollback device according to the present invention. As shown in FIG. 10, the device may include: a second division unit 101, a second setting unit 102, a difference analysis unit 103, and a data rollback unit 104.

The second division unit 101 is configured to divide network data into multiple layers, and establish a dependency relationship between the multiple layers, where the multiple layers at least include a second-class layer depending on another layer and a first-class layer on which another layer depends; and divide network data at each layer into basic feature data and extended feature data, and establish a dependency relationship between the extended feature data at each layer and the basic feature data at a same layer. For example, as shown in FIG. 6, the second division unit 101 may divide the network data into a wireless device layer, a wireless transmission layer, and a wireless service layer according to different functions of the network data. The wireless device layer is a first-class layer; the wireless transmission layer is a first-class layer and also is a second-class layer, and depends on the wireless device layer when acting as a second-class layer, and the wireless service layer depends on the wireless transmission layer when the wireless transmission layer acts as a first-class layer; and the wireless service layer is a second-class layer, and depends on the wireless transmission layer. In addition, network data at the wireless device layer, the wireless transmission layer, and the wireless service layer may be further divided into different basic features and extended features, for example, the network data at the wireless device layer may be further divided into a basic feature D and an extended feature E, the network data at the wireless transmission layer may be further divided into a basic feature F and an extended feature R, and the network data at the wireless service layer may be further divided into a basic feature G, a basic feature H, an extended feature S, and an extended feature T, where the extended feature S depends on the basic feature G, and the extended feature T depends on the basic feature H.

The second setting unit 102 is configured to set an inter-layer rollback rule and an intra-layer rollback rule, where the inter-layer rollback rule includes: for a second-class layer depending on another layer, performing rollback by using the intra-layer rollback rule, and for a first-class layer on which another layer depends, rolling back network data of all other layers depending on the first-class layer at the same time when feature data at the first-class layer is rolled back by using the intra-layer rollback rule. The intra-layer rollback rule includes: performing data rollback on intra-layer extended feature data when the intra-layer extended feature data is rolled back, and performing data rollback on intra-layer basic feature data and extended feature data depending on the basic feature data together when the intra-layer basic feature data is rolled back. With reference to FIG. 6, it can be known that, when data at the wireless service layer needs to be rolled back, it is set that the basic feature and the extended feature data at the wireless service layer are rolled back by using the intra-layer rollback rule. For example, when the basic feature data G at the wireless service layer needs to be rolled back, the basic feature data G is directly rolled back. When the extended feature data S at the wireless service layer needs to be rolled back, a set rollback rule may be that, the extended feature data S and the basic feature data G need to be rolled back at the same time. When the basic feature F at the wireless transmission layer needs to be rolled back, a set rollback rule may be that, the basic feature F and all feature data (the basic feature data G, the basic feature data H, the extended feature data S, and the extended feature data T) at the wireless service layer need to be rolled back at the same time.

The difference analysis unit 103 is configured to: when data rollback needs to be performed, compare a data snapshot at a second time stamp with a data snapshot at a first time stamp to find different feature data. With reference to FIG. 6, it is assumed that, at the first time stamp, at the wireless device layer, a state of the basic feature data D is D1 and a state of the extended feature E is E1; at the wireless transmission layer, a state of the basic feature data F is F1 and a state of the extended feature data R is R1; and at the wireless service layer, a state of the basic feature data G is G1, a state of the basic feature data H is HI, a state of the extended feature data S is S1, and a state of the extended feature data T is T1; and at the second time stamp, at the wireless device layer, the state of the basic feature data D is D2, and the state of the extended feature data E is E2; at the wireless transmission layer, the state of the basic feature data F is F1 and the state of the extended feature data R is R1; and at the wireless service layer, the state of the basic feature data G is G2, the state of the basic feature data H is HI, the state of the extended feature data S is S2, and the state of the extended feature data T is T2. Therefore, after the comparison in step S313, the different feature data is the basic feature D at the wireless device layer, the basic feature data E at the wireless device layer, and the basic feature data G, the feature data S, and the extended feature data T at the wireless service layer.

The data rollback unit 104 is configured to select, from the different feature data found by the difference analysis unit 103, feature data that needs to be rolled back, and perform data rollback according to a preset rollback rule, so as to roll back a part or all of network data at the second time stamp to a network data state at the first time stamp.

Further, as shown in FIG. 11, the data rollback unit 104 in this embodiment may further include: a selection unit 1041, a third rollback unit 1042, a fourth rollback unit 1043, a fifth rollback unit 1044, and a sixth rollback unit 1045 (in specific implementation, under the premise of including the selection unit, the data rollback unit 104 may include one or more of the third rollback unit 1042, the fourth rollback unit 1043, the fifth rollback unit 1044, and the sixth rollback unit 1045).

The selection unit 1041 is configured to select, from the different feature data found by the difference analysis unit, the feature data that needs to be rolled back. In specific implementation, the selection unit 1041 may select one or more pieces of the different feature data from the different feature data as the feature data that needs to be rolled back. With reference to FIG. 6, one or more pieces of the basic feature D at the wireless device layer, the basic feature data E at the wireless device layer, and the basic feature data G, the feature data S, and the extended feature data T at the wireless service layer may be selected as the different feature data.

The third rollback unit 1042 is configured to: when the selected feature data is extended feature data at a second-class layer depending on another layer, perform data rollback on the extended feature data, so as to roll back a part or all of the network data at the second time stamp to the network data state at the first time stamp. With reference to FIG. 6, when the selected feature data is the extended feature data T at the wireless service layer, the extended feature data T may be directly rolled back to the state T1 at the first time stamp from the state T2 at the second time stamp.

The fourth rollback unit 1043 is configured to: when the selected feature data is basic feature data at a second-class layer depending on another layer, perform data rollback on the basic feature data and extended feature data depending on the basic feature data together, so as to roll back a part or all of the network data at the second time stamp to the network data state at the first time stamp. With reference to FIG. 6, when the feature data selected by the selection unit 1042 is the basic feature data G at the wireless service layer, the fourth rollback unit 1043 needs to roll back the extended feature data S depending on the basic feature data G to the state S1 at the first time stamp from the S2 at the second time stamp at the same time when rolling back the basic feature data G to the state G1 at the first time stamp from the G2 at the second time stamp.

The fifth rollback unit 1044 is configured to: when the selected feature data is extended feature data at a first-class layer on which another layer depends, perform data rollback on the extended feature data, and at the same time, roll back all network data at all other layers depending on the first-class layer, so as to roll back a part or all of the network data at the second time stamp to the network data state at the first time stamp. With reference to FIG. 6, when the feature data selected by the selection unit 1041 is the extended feature data E at the wireless device layer, the fifth rollback unit 1044 rolls back the extended feature data E to the state E1 at the first time stamp from the E2 at the second time stamp.

The sixth rollback unit 1045 is configured to: when the selected feature data is basic feature data at a first-class layer on which another layer depends, perform data rollback on the basic feature data and extended feature data depending on the basic feature data together, and at the same time, roll back all network data at all other layers depending on the first-class layer, so as to roll back a part or all of the network data at the second time stamp to the network data state at the first time stamp. With reference to FIG. 6, when the feature data selected by the selection unit 1041 is the basic feature data D at the wireless device layer, the sixth rollback unit 1045 needs to roll back the extended feature data E depending on the basic feature data D to the state E1 at the first time stamp from the E2 at the second time stamp at the same time when rolling back the basic feature data D to the state D1 at the first time stamp from the D2 at the second time stamp.

It can be seen from the foregoing that, in some feasible implementation manners of the present invention, network data is formed by multiple kinds of feature data or the network data includes multiple layers, and at least one kind of feature data is included at each layer. When data rollback needs to be performed, a data snapshot at a second time stamp is compared with a data snapshot at a first time stamp to find different feature data; and feature data that needs to be rolled back is selected from the different feature data, and data rollback is performed according to a preset rollback rule, so as to roll back a part or all of network data at the second time stamp to a network data state at the first time stamp. Therefore, according to the embodiment of the present invention, data rollback may be performed by using feature data as a unit for rollback, and when the rollback is performed, the feature data that needs to be rolled back can be selectively selected from the different feature data, which, compared with a manner in the prior art that different data needs to be completely rolled back, is more flexible, reduces overall impact of network data rollback on a network (for example, if physical hardware configuration and data configuration of network planning and network optimization are performed on the network at the same time, and when a network index is deteriorated because network planning and network optimization data is changed, only the data configuration of network planning and network optimization may be selected to be rolled back, and hardware modification may be avoided during the configuration rollback), and improves the rollback efficiency due to a reduced data volume for rollback.

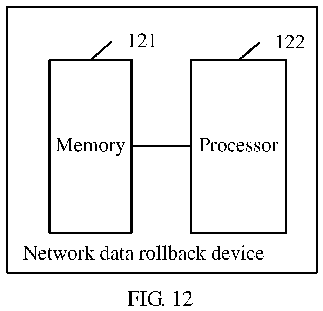

FIG. 12 is a schematic structural composition diagram of a fourth embodiment of a network data rollback device according to the present invention. As shown in FIG. 12, hardware modules of the network data rollback device in this embodiment includes a memory 121 and a processor 122, where the memory 121 is configured to store a segment of computer code, and the processor 122 is configured to run computer code stored in the memory 121 to perform the following steps:
when data rollback needs to be performed, comparing a data snapshot at a second time stamp with a data snapshot at a first time stamp to find different feature data; and
selecting, from the different feature data, feature data that needs to be rolled back, and performing data rollback according to a preset rollback rule, so as to roll back a part or all of network data at the second time stamp to a network data state at the first time stamp.

In some feasible implementation manners, when network data is formed by multiple pieces of feature data, before performing the data rollback, the processor 122 further performs the following steps:
dividing the network data into basic feature data and extended feature data, and establishing a dependency relationship between the extended feature data and the basic feature data; and
setting a rollback rule, where the rollback rule includes: performing data rollback only on extended feature data when the extended feature data is rolled back, and performing data rollback on basic feature data and extended feature data depending on the basic feature data together when the basic feature data is rolled back; and
the network data rollback device further includes a memory, configured to store the rollback rule set by the processor.

In some feasible implementation manners, when network data includes multiple layers, and each layer includes at least one piece of feature data, before performing the data rollback, the processor 122 further performs the following steps:
dividing the network data into multiple layers, and establishing a dependency relationship between the multiple layers, where the multiple layers at least include a second-class layer depending on another layer and a first-class layer on which another layer depends; and
dividing network data at each layer into basic feature data and extended feature data, and establishing a dependency relationship between the extended feature data at each layer and the basic feature data at a same layer; and
setting an inter-layer rollback rule and an intra-layer rollback rule, where the inter-layer rollback rule includes: for a second-class layer depending on another layer, performing rollback by using the intra-layer rollback rule, and for a first-class layer on which another layer depends, rolling back network data of all other layers depending on the first-class layer at the same time when feature data at the first-class layer is rolled back by using the intra-layer rollback rule; where
the intra-layer rollback rule includes: performing data rollback on intra-layer extended feature data when the intra-layer extended feature data is rolled back, and performing data rollback on intra-layer basic feature data and extended feature data depending on the basic feature data together when the intra-layer basic feature data is rolled back; and
the network data rollback device further includes a memory, configured to store the rollback rule set by the processor.

In some feasible implementation manners, the step, which is performed by the processor 122, of selecting, from the different feature data, feature data that needs to be rolled back, and performing data rollback according to a preset rollback rule, so as to roll back a part or all of network data at the second time stamp to a network data state at the first time stamp, specifically includes:
selecting, from the different feature data, the feature data that needs to be rolled back;
when the selected feature data is extended feature data, performing data rollback on the extended feature data, so as to roll back a part or all of the network data at the second time stamp to the network data state at the first time stamp; and
when the selected feature data is basic feature data, performing data rollback on the basic feature data and extended feature data depending on the basic feature data together, so as to roll back a part or all of the network data at the second time stamp to the network data state at the first time stamp.

In some feasible implementation manners, the step, which is performed by the processor 122, of selecting, from the different feature data, feature data that needs to be rolled back, and performing data rollback according to a preset rollback rule, so as to roll back a part or all of network data at the second time stamp to a network data state at the first time stamp, specifically includes:
selecting, from the different feature data, the feature data that needs to be rolled back;
when the selected feature data is extended feature data at a second-class layer depending on another layer, performing data rollback on the extended feature data, so as to roll back a part or all of the network data at the second time stamp to the network data state at the first time stamp;
when the selected feature data is basic feature data at a second-class layer depending on another layer, performing data rollback on the basic feature data and extended feature data depending on the basic feature data together, so as to roll back a part or all of the network data at the second time stamp to the network data state at the first time stamp;
when the selected feature data is extended feature data at a first-class layer on which another layer depends, performing data rollback on the extended feature data, and at the same time, rolling back all network data at all other layers depending on the first-class layer, so as to roll back a part or all of the network data at the second time stamp to the network data state at the first time stamp; and
when the selected feature data is basic feature data at a first-class layer on which another layer depends, performing data rollback on the basic feature data and extended feature data depending on the basic feature data together, and at the same time, rolling back all network data at all other layers depending on the first-class layer, so as to roll back a part or all of the network data at the second time stamp to the network data state at the first time stamp.

In specific implementation, the present invention further provides a computer storage medium, where the computer storage medium is capable of storing a program, and when the program runs, a part or all of the steps in the embodiments of the network data rollback method provided in the present invention are performed. The storage medium may be a magnetic disk, an optical disc, a read-only memory (Read-Only Memory, ROM), a random access memory (Random Access Memory, RAM), or the like.

Apparently, a person skilled in the art may make various modifications and variations to the present invention without departing from the scope of the present invention, which is defined by the claims. In this way, if these modifications and variations to the present invention fall within the scope of the claims, the present invention also intends to include these modifications and variations.

## Claims

1. A network data rollback method performed by a network data rollback device, wherein network data comprises multiple layers, and each layer comprises at least one piece of feature data, and the network data rollback method comprises:
dividing (S310) the network data into multiple layers, and establishing a dependency relationship between the multiple layers, wherein the multiple layers at least comprise a second-class layer depending on another layer and a first-class layer on which another layer depends; and
dividing (S311) network data at each layer into basic feature data and extended feature data, and establishing a dependency relationship between the extended feature data at each layer and the basic feature data at a same layer;
setting (S312) an inter-layer rollback rule and an intra-layer rollback rule, and
when data rollback needs to be performed, comparing (S110) a data snapshot at a second time stamp with a data snapshot at a first time stamp to find different feature data having a different state between the two data snapshots at the first time stamp and second time stamp;
selecting (Sill; S213; S314), from the different feature data, feature data that needs to be rolled back, and
performing (Sill), according to the inter-layer rollback rule and the intra-layer rollback rule, data rollback of a part or all of network data at the second time stamp to a network data state at the first time stamp,
wherein the inter-layer rollback rule comprises: when the selected feature data is at a second-class layer depending on another layer, performing rollback on the selected feature data by using the intra-layer rollback rule, and when the selected feature data is at a first-class layer on which another layer depends, rolling back the selected feature data at the first-class layer by using the intra-layer rollback rule and at the same time rolling back all network data of all other layers depending on the first-class layer; and
the intra-layer rollback rule comprises: when the selected feature data is extended feature data performing data rollback on the selected extended feature data, and when the selected feature data is basic feature data, performing data rollback on the selected basic feature data and extended feature data depending on the selected basic feature data together.

2. A network data rollback device, wherein network data comprises multiple layers, each layer comprises at least one piece of feature data, and the network data rollback device comprises:
a second division unit (101), configured to divide the network data into multiple layers, and establish a dependency relationship between the multiple layers,
wherein the multiple layers at least comprise a second-class layer depending on another layer and a first-class layer on which another layer depends; and divide network data at each layer into basic feature data and extended feature data, and establish a dependency relationship between the extended feature data at each layer and the basic feature data at a same layer;
a second setting unit (102), configured to set an inter-layer rollback rule and an intra-layer rollback rule, and
a difference analysis unit (71), configured to: when data rollback needs to be performed, compare a data snapshot at a second time stamp with a data snapshot at a first time stamp to find different feature data having a different state between the two data snapshots at the first time stamp and second time stamp; and
a data rollback unit (72), configured to select, from the different feature data found by the difference analysis unit, feature data that needs to be rolled back, and perform, according to the inter-layer rollback rule and the intra-layer rollback rule, data rollback of a part or all of network data at the second time stamp to a network data state at the first time stamp,
wherein the inter-layer rollback rule comprises: when the selected feature data is at a second-class layer depending on another layer, performing rollback on the selected feature data by using the intra-layer rollback rule, and when the selected feature data is at a first-class layer on which another layer depends, rolling back the selected feature data at the first-class layer by using the intra-layer rollback rule and at the same time rolling back all network data of all other layers depending on the first-class layer; and
the intra-layer rollback rule comprises: when the selected feature data is extended feature data, performing data rollback on the selected extended feature data, and when the selected feature data is basic feature data, performing data rollback on the selected basic feature data and extended feature data depending on the selected basic feature data together.

3. A computer storage medium, comprising a program stored thereon, which when run on computer, results in the execution of the steps of the method of claim 1.

## Patentansprüche

1. Netzwerkdaten-Rollback-Verfahren, durchgeführt von einer Netzwerkdaten-Rollback-Vorrichtung, wobei die Netzwerkdaten mehrere Schichten umfassen und jede Schicht mindestens ein Stück von Merkmalsdaten umfasst, und das Netzwerkdaten-Rollback-Verfahren Folgendes umfasst: Unterteilen (S310) der Netzwerkdaten in mehrere Schichten, und Einrichten einer Abhängigkeitsbeziehung zwischen den mehreren Schichten, wobei die mehreren Schichten zumindest eine zweitklassige Schicht umfassen, die von einer weiteren Schicht abhängig ist, und eine erstklassige Schicht, von der eine weitere Schicht abhängig ist; und
Unterteilen (S311) der Netzwerkdaten an jeder Schicht in grundlegende Merkmalsdaten und erweiterte Merkmalsdaten, und Einrichten einer Abhängigkeitsbeziehung zwischen den erweiterten Merkmalsdaten an jeder Schicht und den grundlegenden Merkmalsdaten an einer gleichen Schicht;
Festlegen (S312) einer Zwischenschicht-Rollback-Regel und einer Intraschicht-Rollback-Regel, und
wenn ein Daten-Rollback durchgeführt werden muss, Vergleichen (S110) eines Daten-Snapshots an einem zweiten Zeitstempel mit einem Daten-Snapshot an einem ersten Zeitstempel, um unterschiedliche Merkmalsdaten zu finden, die einen unterschiedlichen Zustand zwischen den zwei Daten-Snapshots am ersten Zeitstempel und am zweiten Zeitstempel aufweisen;
Auswählen (S111; S213; S314), aus den unterschiedlichen Merkmalsdaten, von Merkmalsdaten, die zurückgerollt werden müssen, und
Durchführen (S111), gemäß der Zwischenschicht-Rollback-Regel und der Intraschicht-Rollback-Regel, eines Daten-Rollbacks eines Teils oder aller der Netzwerkdaten am zweiten Zeitstempel auf einen Netzwerkdatenzustand am ersten Zeitstempel,
wobei die Zwischenschicht-Rollback-Regel Folgendes umfasst:
wenn sich die ausgewählten Merkmalsdaten an einer zweitklassigen Schicht befinden, die von einer weiteren Schicht abhängig ist, Durchführen des Rollbacks an den ausgewählten Merkmalsdaten unter Verwendung der Intraschicht-Rollback-Regel, und wenn sich die ausgewählten Merkmalsdaten an einer erstklassigen Schicht befinden, von der eine weitere Schicht abhängig ist, Zurückrollen der ausgewählten Merkmalsdaten an der erstklassigen Schicht unter Verwendung der Intraschicht-Rollback-Regel und gleichzeitiges Zurückrollen aller Netzwerkdaten von allen anderen Schichten, die von der erstklassigen Schicht abhängig sind; und
wobei die Intraschicht-Rollback-Regel Folgendes umfasst: wenn die ausgewählten Merkmalsdaten erweiterte Merkmalsdaten sind, Durchführen eines Daten-Rollbacks an den ausgewählten erweiterten Merkmalsdaten, und
wenn die ausgewählten Merkmalsdaten grundlegende Merkmalsdaten sind, Durchführen eines gemeinsamen Daten-Rollbacks an den ausgewählten grundlegenden Merkmalsdaten und den erweiterten Merkmalsdaten, die von den ausgewählten grundlegenden Merkmalsdaten abhängig sind.

2. Netzwerkdaten-Rollback-Vorrichtung, wobei die Netzwerkdaten mehrere Schichten umfassen und jede Schicht mindestens ein Stück von Merkmalsdaten umfasst, und die Netzwerkdaten-Rollback-Vorrichtung Folgendes umfasst:
eine zweite Unterteilungseinheit (101), die dazu ausgelegt ist, die Netzwerkdaten in mehrere Schichten aufzuteilen und eine Abhängigkeitsbeziehung zwischen den mehreren Schichten einzurichten,
wobei die mehreren Schichten zumindest eine zweitklassige Schicht aufweisen, die von einer weiteren Schicht abhängig ist, und eine erstklassige Schicht, von der eine weitere Schicht abhängig ist; und Unterteilen der Netzwerkdaten an jeder Schicht in grundlegende Merkmalsdaten und erweiterte Merkmalsdaten, und Einrichten einer Abhängigkeitsbeziehung zwischen den erweiterten Merkmalsdaten an jeder Schicht und den grundlegenden Merkmalsdaten an einer gleichen Schicht;
eine zweite Festlegungseinheit (102), die dazu ausgelegt ist, eine Zwischenschicht-Rollback-Regel und eine Intraschicht-Rollback-Regel festzulegen, und
eine Differenzanalyseeinheit (71), die für Folgendes ausgelegt ist: wenn Daten-Rollback durchgeführt werden muss, Vergleichen eines Daten-Snapshots an einem zweiten Zeitstempel mit einem Daten-Snapshot an einem ersten Zeitstempel, um unterschiedliche Merkmalsdaten zu finden, die einen unterschiedlichen Zustand zwischen den zwei Daten-Snapshots am ersten Zeitstempel und am zweiten Zeitstempel aufweisen; und
eine Daten-Rollback-Einheit (72), die dazu ausgelegt ist, aus den von der Differenzanalyseeinheit gefundenen unterschiedlichen Merkmalsdaten solche Merkmalsdaten auszuwählen, die zurückgerollt werden müssen, und gemäß der Zwischenschicht-Rollback-Regel und der Intraschicht-Rollback-Regel ein Daten-Rollback eines Teils oder aller der Netzwerkdaten am zweiten Zeitstempel auf einen Netzwerkdatenzustand am ersten Zeitstempel durchzuführen,
wobei die Zwischenschicht-Rollback-Regel Folgendes umfasst: wenn sich die ausgewählten Merkmalsdaten an einer zweitklassigen Schicht befinden, die von einer weiteren Schicht abhängig ist, Durchführen des Rollbacks an den ausgewählten Merkmalsdaten unter Verwendung der Intraschicht-Rollback-Regel, und wenn sich die ausgewählten Merkmalsdaten an einer erstklassigen Schicht befinden, von der eine weitere Schicht abhängig ist, Zurückrollen der ausgewählten Merkmalsdaten an der erstklassigen Schicht unter Verwendung der Intraschicht-Rollback-Regel und gleichzeitiges Zurückrollen aller Netzwerkdaten von allen anderen Schichten, die von der erstklassigen Schicht abhängig sind; und
wobei die Intraschicht-Rollback-Regel Folgendes umfasst:
wenn die ausgewählten Merkmalsdaten erweiterte Merkmalsdaten sind, Durchführen eines Daten-Rollbacks an den ausgewählten erweiterten Merkmalsdaten, und wenn die ausgewählten Merkmalsdaten grundlegende Merkmalsdaten sind, Durchführen eines gemeinsamen Daten-Rollbacks an den ausgewählten grundlegenden Merkmalsdaten und den erweiterten Merkmalsdaten, die von den ausgewählten grundlegenden Merkmalsdaten abhängig sind.

3. Computer-Speichermedium, das ein darauf gespeichertes Programm enthält, das, wenn es auf dem Computer ausgeführt wird, in der Ausführung der Schritte des Verfahrens nach Anspruch 1 resultiert.

## Revendications

1. Procédé de restauration de données de réseau réalisé par un dispositif de restauration de données de réseau, les données de réseau comprenant de multiples couches, et chaque couche comprenant au moins un élément de données d'attribut, et le procédé de restauration de données de réseau comprenant :
diviser (S310) les données de réseau en de multiples couches, et établir une relation de dépendance entre les multiples couches, les multiples couches comprenant au moins une couche de seconde classe dépendant d'une autre couche et une couche de première classe dont dépend une autre couche ; et
diviser (S311) les données de réseau, au niveau de chaque couche, en données d'attribut de base et en données d'attribut étendues, et établir une relation de dépendance entre les données d'attribut étendues au niveau de chaque couche et les données d'attribut de base au niveau d'une même couche ;
définir (S312) une règle de restauration intercouche et une règle de restauration intracouche ; et
quand une restauration de données doit être réalisée, comparer (S110) un instantané de données à un second horodatage à un instantané de données à un premier horodatage pour trouver différentes données d'attribut ayant un état différent entre les deux instantanés d'attribut au premier horodatage et au second horodatage ;
sélectionner (S111 ; S213 ; S314), parmi les différentes données d'attribut, des données d'attribut qui doivent être restaurées ; et
réaliser (S111), selon la règle de restauration intercouche et la règle de restauration intracouche, une restauration de données d'une partie ou de la totalité des données de réseau au second horodatage vers un état de données de réseau au premier horodatage ;
la règle de restauration intercouche consistant à : quand les données d'attribut sélectionnées sont au niveau d'une couche de seconde classe dépendant d'une autre couche, réaliser une restauration sur les données d'attribut sélectionnées au moyen de la règle de restauration intracouche, et quand les données d'attribut sélectionnées sont au niveau d'une couche de première classe dont dépend une autre couche, restaurer les données d'attribut sélectionnées au niveau de la couche de première classe au moyen de la règle de restauration intracouche et, simultanément, restaurer toutes les données de réseau de toutes les autres couches dépendant de la couche de première classe ; et
la règle de restauration intracouche consiste à : quand les données d'attribut sélectionnées sont des données d'attribut étendues, réaliser une restauration de données sur les données d'attribut étendues sélectionnées, et quand les données d'attribut sélectionnées sont des données d'attribut de base, réaliser une restauration de données sur les données d'attribut de base sélectionnées ainsi que sur les données d'attribut étendues dépendant des données d'attribut de base sélectionnées.

2. Dispositif de restauration de données de réseau, les données de réseau comprenant de multiples couches, chaque couche comprenant au moins un élément de données d'attribut, et le dispositif de restauration de données de réseau comprenant :
une seconde unité de division (101), configurée pour diviser les données de réseau en de multiples couches, et établir une relation de dépendance entre les multiples couches, les multiples couches comprenant au moins une couche de seconde classe dépendant d'une autre couche et une couche de première classe dont dépend une autre couche ; et diviser les données de réseau, au niveau de chaque couche, en données d'attribut de base et en données d'attribut étendues, et établir une relation de dépendance entre les données d'attribut étendues au niveau de chaque couche et les données d'attribut de base au niveau d'une même couche ;
une seconde unité de définition (102), configurée pour définir une règle de restauration intercouche et une règle de restauration intracouche ; et
une unité d'analyse de différence (71), configurée pour : quand une restauration de données doit être réalisée, comparer un instantané de données à un second horodatage à un instantané de données à un premier horodatage pour trouver différentes données d'attribut ayant un état différent entre les deux instantanés d'attribut au premier horodatage et au second horodatage ; et
une unité de restauration de données (72), configurée pour sélectionner, parmi les différentes données d'attribut, des données d'attribut qui doivent être restaurées, et réaliser, selon la règle de restauration intercouche et la règle de restauration intracouche, une restauration de données d'une partie ou de la totalité des données de réseau au second horodatage vers un état de données de réseau au premier horodatage ;
la règle de restauration intercouche consistant à : quand les données d'attribut sélectionnées sont au niveau d'une couche de seconde classe dépendant d'une autre couche, réaliser une restauration sur les données d'attribut sélectionnées au moyen de la règle de restauration intracouche, et quand les données d'attribut sélectionnées sont au niveau d'une couche de première classe dont dépend une autre couche, restaurer les données d'attribut sélectionnées au niveau de la couche de première classe au moyen de la règle de restauration intracouche et, simultanément, restaurer toutes les données de réseau de toutes les autres couches dépendant de la couche de première classe ; et
la règle de restauration intracouche consiste à : quand les données d'attribut sélectionnées sont des données d'attribut étendues, réaliser une restauration de données sur les données d'attribut étendues sélectionnées, et quand les données d'attribut sélectionnées sont des données d'attribut de base, réaliser une restauration de données sur les données d'attribut de base sélectionnées ainsi que sur les données d'attribut étendues dépendant des données d'attribut de base sélectionnées.

3. Support de stockage informatique, sur lequel est stocké un programme qui, lorsqu'il est exécuté sur un ordinateur, provoque l'exécution des étapes du procédé selon la revendication 1.
